# EUROPÄISCHE PATENTANMELDUNG

(11) **EP 4 671 150 A1**
(43) Veröffentlichungstag der Anmeldung: **31.12.2025**
(21) Anmeldenummer: 25185071.5
(22) Anmeldetag: 25.06.2025
(51) Int. Cl.: B65D 19/38, B65D 19/06, B65D 21/024, B65D 21/032, B65D 85/64

(54) **GERÜSTMODUL UND GERÜSTSYSTEM ZUM TRANSPORTIEREN EINES TRANSPORTGUTS, INSBESONDERE EINES LANGGUTS**

(30) Priorität: 25.06.2024 DE 202024103427 U
(71) Anmelder: Buck, Dipl.-Ing. Martin, 27404 Zeven-Wistedt (DE)
(72) Erfinder: Buck, Dipl.-Ing. Martin, 27404 Zeven-Wistedt (DE)
(74) Vertreter: Glawe, Delfs, Moll

(57) **Zusammenfassung**

Ein Gerüstmodul (14) für ein Gerüstsystem (13) zum Transportieren eines Transportguts, insbesondere eines Langguts, umfasst zwei Gerüstseitenelemente (30) zur seitlichen Begrenzung einer Transportfläche (15) und wenigstens ein Querverbindungselement (20), das mit den beiden Gerüstseitenelementen (30) zur Herstellung eines Transportzustands des Gerüstmoduls (14) lösbar verbindbar ist, um die Gerüstseitenelemente (30) auf gegenüberliegenden Seiten der Transportfläche (15) zu positionieren. Das Gerüstmodul (14) weist einen Bodenbereich (26) auf, in dem im Transportzustand des Gerüstmoduls (14) eine Standard-Palette (40) derart anordenbar ist, dass eine Oberseite der Standard-Palette (40) die Transportfläche (15) bildet, wobei das Querverbindungselement (20) und/oder die Gerüstseitenelemente (40) weiterhin wenigstens ein Halteelement (23, 24) aufweisen, das zum Halten der Standard-Palette (40) am Gerüstmodul (14) ausgebildet ist. Das Gerüstmodul ist mit einem in Längsrichtung benachbarten im Wesentlichen identischen zweiten Gerüstmodul (14) derart lösbar verbindbar, dass die Transportfläche (15) des ersten Gerüstmoduls (14) mit einer Transportfläche (15) des zweiten Gerüstmoduls (14) eine in Längsrichtung durchgängige gemeinsame Transportfläche bilden. Die Gerüstseitenelemente (30) des ersten Gerüstmoduls (14) und die Gerüstseitenelemente (30) des zweiten Gerüstmoduls (14) sind mit einem gemeinsamen Querverbindungselement (20) lösbar verbindbar.

## Beschreibung

Gegenstand der vorliegenden Erfindung ist ein Gerüstmodul sowie ein Gerüstsystem zum Transportieren eines Transportguts, insbesondere eines Langguts.

Um ein empfindliches Langgut wie beispielsweise Rollläden, Markisen, oder Teppiche in einem Lkw zu transportieren, wird das Langgut üblicherweise auf einer Transportunterlage abgelegt und unter Verwendung von Polster- und Stützmaterial, beispielsweise aus Holz, Kunststoff oder Wellpappe, an der Transportunterlage festgezurrt. Die Transportunterlage kann dann mit Hilfe eines Gabelstaplers von einer Querseite des Langguts her aufgenommen und auf der Ladefläche des Lkw abgestellt werden. Problematisch daran ist, dass das Stütz- und Polstermaterial üblicherweise nach einmaliger Verwendung entsorgt wird. Dies führt zu Ressourcenverschwendung und ist nicht nachhaltig. Zudem ist es üblicherweise nicht ohne Weiteres möglich, das Langgut übereinander zu stapeln, wodurch das im LKW verfügbare Transportvolumen nicht optimal ausgenutzt wird.

Es ist die Aufgabe der vorliegenden Erfindung ein Gerüstmodul sowie ein Gerüstsystem zum Transportieren von Langgut bereitzustellen, welches die vorstehend genannten Probleme vermindert.

Demnach betrifft die Erfindung ein Gerüstmodul für ein Gerüst zum Transportieren von Langgut. Das Gerüstmodul umfasst zwei Gerüstseitenelemente zur seitlichen Begrenzung einer Transportfläche des Gerüstmoduls und wenigstens ein Querverbindungselement. Das Querverbindungselement ist jeweils mit den beiden Gerüstseitenelementen zur Herstellung eines Transportzustands des Gerüstmoduls lösbar verbindbar, um die Gerüstseitenelemente auf gegenüberliegenden Seiten der Transportfläche zu positionieren. Das Gerüstmodul weist zudem einen Bodenbereich auf, in dem im Transportzustand des Gerüstmoduls eine Standard-Palette derart anordenbar ist, dass eine Oberseite der Standard-Palette die Transportfläche bildet. Das Querverbindungselement und/oder die Gerüstseitenelemente weisen weiterhin wenigstens ein Halteelement auf, das zum Halten der Standard-Palette am Gerüstmodul 14) ausgebildet ist.

Indem an dem Querverbindungselement und/oder an den Gerüstseitenelementen Halteelemente zum Halten einer Standard-Palette ausgebildet sind, kann die Standard-Palette auf einfache Weise am Gerüstmodul fixiert werden, so dass die Oberfläche der Standard-Palette als Transportfläche des Gerüstmoduls dient. Ein Transportgut kann dann einfach auf die Oberfläche der Palette abgelegt und daran befestigt werden. Da Standard-Paletten üblicherweise derart genormt sind, dass sie auf einfache Weise mit Hilfe von Flurförderzeugen transportiert werden können, kann auch das Gerüstmodul, in dessen Bodenbereich sich die Standard-Palette befindet, einfach beispielsweise mit einem Hubstapler von der Querseite her aufgenommen und in einem LKW abgestellt werden. Nachdem das Transportgut an seinem Ziel angekommen ist, können die Gerüstseitenelemente von den Querverbindungselementen gelöst werden, so dass die Einzelteile platzsparend gelagert oder zum nächsten Einsatzort transportiert und wiederverwendet werden können.

Bei der Standard-Palette kann es sich insbesondere um eine Europool-Palette nach EN 13698-1 handeln, die die Maße von 1200 mm x 800 mm (Länge × Breite) aufweist. Die Standard-Palette kann aber auch eine Europool-Halbpalette (600 mm x 800 mm), eine Industriepalette nach DIN 15146/3 (1200 mm x 1000 mm) oder eine Containerpalette (1140 mm x 1140 mm) sein. Eine (in Querrichtung gemessene) Breite des Gerüstmoduls kann im Wesentlichen mit einer Breite der Standard-Palette übereinstimmen.

In einer Ausführungsform ist das Gerüstmodul mit einem weiteren im Wesentlichen identisch ausgebildeten Gerüstmodul im Transportzustand stapelbar ausgebildet. Dazu können die Gerüstseitenelemente einen oberen Rand aufweisen, auf dem das wenigstens eine Querverbindungselement und/oder die Gerüstseitenelemente des weiteren Gerüstmoduls abstellbar sind. Es kann auch vorgesehen sein, dass ein Rand einer im Bodenbereich des weiteren Gerüstmoduls befindlichen Standard-Palette auf dem oberen Rand der Gerüstseitenelemente abstellbar ist. Durch die Stapelbarkeit können mehrere Transportgüter übereinander transportiert werden, wobei die Transportfläche in jeder Ebene durch die dort jeweils befindlichen Standard-Paletten gebildet wird. Zur Stabilisierung können die übereinander gestapelten Gerüstmodule einfach durch Spanngurte miteinander verzurrt werden. Die Spanngurte können dabei an einer Oberseite, insbesondere am oberen Rand der Gerüstseitenelemente anliegen.

In einer Ausführungsform weist das Querverbindungselement an seinen Querenden jeweils eine Aufnahme auf, wobei die Gerüstseitenelemente an ihren Längsenden jeweils einen zum Einführen in eine der Aufnahmen ausgebildeten Verbindungsvorsprung umfassen. Es kann vorgesehen sein, dass ein jeweiliger Verbindungsvorsprung im Wesentlichen entlang der Vertikalen in eine jeweilige Aufnahme einführbar ist. Bei der Aufnahme kann es sich um eine Hülse handeln. Entsprechend kann der Verbindungsvorsprung insbesondere ein an den inneren Querschnitt der Hülse angepasstes Stabelement sein. Die Aufnahme kann in vertikaler Richtung eine Erstreckung aufweisen, die wenigstens 50 mm, vorzugsweise wenigstens 100 mm beträgt. Wenn der Verbindungsvorsprung in vertikaler Richtung über eine ausreichende Länge in die Aufnahme einführbar ist, können die Gerüstseitenelemente dadurch in vertikaler Richtung aufgestellt und relativ zu den Querverbindungselementen fixiert werden, was dem Gerüstmodul Stabilität verleiht.

Das Halteelement ist in einer Ausführungsform dazu ausgebildet, an einer Unterseite eines Bauteils der Standard-Palette anzuliegen, wenn sich das Gerüstmodul im Transportzustand befindet. Zudem kann wenigstens eines der Halteelemente auch dazu ausgebildet sein, an einer Oberseite eines Bauteils der Standard-Palette anzuliegen, wenn sich das Gerüstmodul im Transportzustand befindet. Wenn Halteelemente sowohl an einer Oberseite als auch an einer Unterseite eines Bauteils der Standardpalette anliegen, kann sich die Standard-Palette relativ zum Gerüstmodul weder nach oben noch nach unten Bewegen, was zur Stabilisierung beiträgt. Insbesondere kann ein erstes Halteelement und ein zweites Halteelement vorgesehen sein, wobei das erste Halteelement und das zweite Halteelement dazu ausgebildet sind, einen Reibschluss mit dem Bauteil der Standard-Palette herzustellen, wenn sich das Gerüstmodul im Transportzustand befindet. Der Reibschluss kann dazu geeignet sein, einer Verschiebung der Transportpalette in Längsrichtung entgegenzuwirken.

In einer Ausführungsform weist das Halteelement ein Befestigungsmittel zur Herstellung einer Verbindung mit dem Bauteil der Standard-Palette auf. Beispielsweise kann das Halteelement ein Durchgangsloch aufweisen, durch das ein Befestigungsmittel, insbesondere eine Schraube, hindurchführbar ist, um eine Verbindung mit der Palette herzustellen.

Möglich ist weiterhin, dass wenigstens eines der Halteelemente zur Bildung eines Formschlusses mit der Standard-Palette eingerichtet ist, so dass im Transportzustand einem seitlichen Verrutschen der Standard-Palette entgegengewirkt wird. Das Halteelement kann insbesondere an einem Querverbindungselement positioniert sein. Zudem kann das Halteelement in Richtung der Transportfläche vom Querverbindungselement abragen. Standard-Paletten wie beispielsweise die Europool-Palette weisen regelmäßig die Oberfläche der Palette bildende in Längsrichtung ausgerichtete Latten auf, zwischen denen ein von einer Längsseite zugänglicher Zwischenraum besteht. Das Halteelement kann dazu eingerichtet sein, in einen solchen Zwischenraum einzugreifen, um einen Formschluss herzustellen, durch den einem Verrutschen der Palette in seitlicher Richtung (also in Querrichtung) entgegengewirkt wird.

In einer Ausführungsform ist vorgesehen, dass das Gerüstmodul im Transportzustand im Bodenbereich wenigstens einen Anschlag aufweist, der dazu ausgebildet ist, einem Verrutschen der im Bodenbereich positionierten Standard-Palette in Längsrichtung entgegenzuwirken. Der Anschlag kann an dem Querverbindungselement ausgebildet sein. Das Querverbindungselement kann in diesem Fall in Längsrichtung neben der Standard-Palette positioniert sein.

In einer Ausführungsform ist das Gerüstmodul mit einem in Längsrichtung des Gerüstmoduls benachbarten im Wesentlichen identischen weiteren Gerüstmodul derart lösbar verbindbar, dass die Transportfläche des Gerüstmoduls mit einer Transportfläche des weiteren Gerüstmoduls eine in Längsrichtung durchgängige gemeinsame Transportfläche bilden. Die Transportfläche des weiteren Gerüstmoduls kann in diesem Fall ebenfalls durch eine Oberseite einer im Bodenbereich des weiteren Gerüstmoduls positionierten Standard-Palette gebildet sein. Es ist auf diese Weise insbesondere möglich, mit Hilfe mehrerer Gerüstmodule eine Mehrzahl von im Transportzustand befindlichen und miteinander verbundenen Gerüstmodulen nebeneinander zu positionieren, so dass eine in Längsrichtung durchgängige Transportfläche aus den einzelnen Transportflächen der Gerüstmodule gebildet wird. Es können dann besonders lange Transportgüter transportiert werden.

Gegenstand der Erfindung ist weiterhin ein Gerüstsystem zum Transportieren von Langgut, umfassend ein erfindungsgemäßes erstes Gerüstmodul und ein erfindungsgemäßes zweites Gerüstmodul. Dabei kann vorgesehen sein, dass die Gerüstseitenelemente des ersten Gerüstmoduls und die Gerüstseitenelemente des zweiten Gerüstmoduls mit einem gemeinsamen Querverbindungselement lösbar verbindbar sind. Das gemeinsame Querverbindungselement kann zur Verbindung der beiden Gerüstmodule dienen. Dazu kann das gemeinsame Querverbindungselement an seinen Querenden jeweils zwei in Längsrichtung benachbarte Aufnahmen aufweisen, wobei in eine dieser Aufnahmen ein Verbindungsvorsprung des Gerüstseitenelements des ersten Gerüstmoduls und in die andere der Aufnahmen ein Verbindungsvorsprung des Gerüstseitenelements des zweiten Gerüstmoduls einführbar ist. Die Aufnahmen können insbesondere durch Hülsen gebildet sein, die beispielsweise fest mit einem Querträger des Querverbindungselements verbunden sind.

Ein Gerüstseitenelement des ersten Gerüstmoduls ist in einer Ausführungsform relativ zu einem Gerüstseitenelement des zweiten Gerüstmoduls durch ein Verbindungselement lösbar verbindbar. Die Gerüstseitenelemente können dazu einen oberen Längsbalken aufweisen, der mit der Verbindungselement zusammenwirkt, um in Längsrichtung benachbarte Gerüstseitenelemente aneinander zu fixieren. Beispielsweise können die Längsbalken benachbarter Gerüstseitenelemente Durchgangslöcher aufweisen, in die jeweils ein Verbindungsbolzen des Verbindungselements eingreifen kann. Durch die Verbindung der benachbarten Gerüstseitenelemente wird das Gerüstsystem versteift und stabilisiert.

Nachfolgend wird eine beispielhafte Ausführungsform der Erfindung unter Bezugnahme auf die beigefügten Zeichnungen beispielhaft erläutert. Es zeigen:
- Figur 1:: ein erfindungsgemäßes Gerüstsystem in einer perspektivischen Seitenansicht;
- Figur 2:: eine weitere Ausführungsform eines erfindungsgemäßen Gerüstsystems in einer perspektivischen Seitenansicht;
- Figur 3:: ein erfindungsgemäßes Gerüstmodul in einer perspektivischen Seitenansicht;
- Figur 4:: eine Draufsicht auf einen Teilbereichs des Gerüstmoduls der Figur 3;
- Figur 5:: eine Querschnittsansicht eines Teilbereichs des Gerüstmoduls der Figur 3;
- Figur 6:: eine seitliche Querschnittsdarstellung des erfindungsgemäßen Gerüstmoduls der Figur 3.

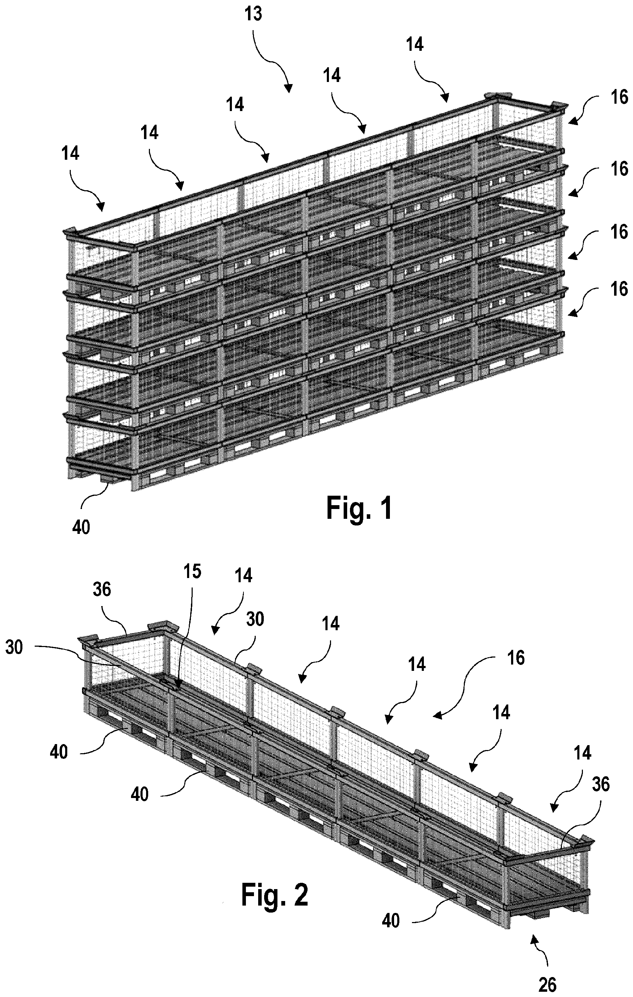

Figur 1 zeigt ein erfindungsgemäßes Gerüstsystem 13 in einer perspektivischen Seitenansicht. Das Gerüstsystem ist aus einer Anzahl von insgesamt 20 erfindungsgemäßen Gerüstmodulen 14 aufgebaut. Jeweils fünf Gerüstmodule 14 bilden eine Gerüstmodulreihe 16, wobei vier Gerüstmodulreihen 16 übereinandergestapelt sind. Es ist erkennbar, dass im Bodenbereich eines jeden Gerüstmoduls 14 eine Palette 40 angeordnet ist, die vorliegend als Europool-Palette mit einer Länge von 1200 mm und einer Breite von 800 mm ausgebildet ist. Die Oberseite einer jeden Palette 40 bildet eine Transportfläche des jeweiligen Gerüstmoduls 14. Durch die Paletten 40 wird innerhalb einer Gerüstmodulreihe 16 eine in Längsrichtung der Gerüstmodule 14 durchgängige Transportfläche gebildet.

Die Paletten weisen seitliche Öffnungen auf, in die die Gabeln eines Hubstaplers eingeführt werden können, um eine Gerüstmodulreihe anzuheben. Während des Transports können übereinander befindliche Gerüstmodulreihen 16 durch Spanngurte miteinander verzurrt werden.

Figur 2 zeigt eine einzelne Gerüstmodulreihe 16, die für sich genommen ebenfalls ein erfindungsgemäßes Gerüstsystem bildet. Bereits in Verbindung mit Figur 1 beschriebene analoge Elemente tragen in Figur 2 dieselben Bezugszeichen. In dieser Ansicht ist noch einmal etwas deutlicher zu erkennen, dass im Bodenbereich 26 eines jeden Gerüstmoduls 14 jeweils eine Palette 40 angeordnet ist, deren Oberseite eine Transportfläche 15 bildet. Die Transportfläche 15 eines Gerüstmoduls 14 wird zu den Seiten hin (also in Querrichtung) von jeweils einem Gerüstseitenelement 30 begrenzt. Die Gerüstmodulreihe 16 weist zudem an den beiden Längsenden jeweils ein Abschlusselement 36 auf, durch das die jeweilige Transportfläche in Längsrichtung begrenzt wird. Die Gerüstseitenelemente 30 und die Abschlusselemente weisen vorliegend ein Drahtgeflecht auf.

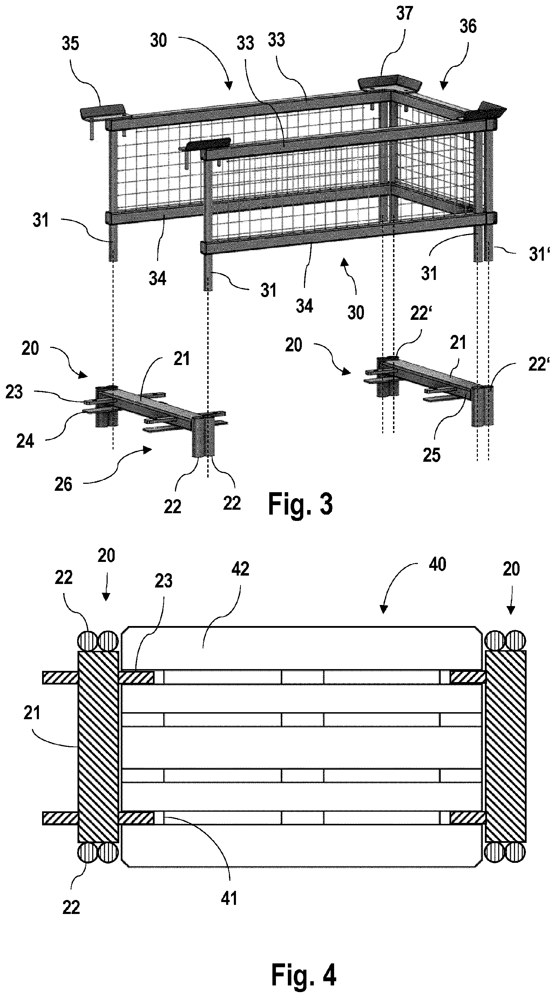

Figur 3 zeigt ein erfindungsgemäßes Gerüstmodul 14 in einer perspektivischen Darstellung und in einem lediglich teilweise zusammengesetzten Zustand. Bereits in Verbindung mit den Figuren 1 und 2 beschriebene analoge Elemente tragen in Figur 3 dieselben Bezugszeichen. Das Gerüstmodul 14 umfasst zwei Gerüstseitenelemente 30 sowie zwei Querverbindungselemente 20. Die Gerüstseitenelemente 30 umfassen jeweils einen rechteckigen Rahmen mit einem oberen Längsbalken 33, einem unteren Längsbalken 34 und zwei Eckpfosten, wobei jeweils ein unteres Ende des Eckpfostens einen Verbindungsvorsprung 31 im Sinne der vorliegenden Offenbarung bildet.

Die Querverbindungselemente 20 weisen jeweils einen Querbalken 21 auf, wobei an jedem Querende des Querbalkens 21 jeweils zwei Hülsen 22 fixiert sind. Die Hülsen 22 sind in Längsrichtung nebeneinander angeordnet. Eine Hülse 22 dient jeweils als Aufnahme für einen Verbindungsvorsprung 31 eines jeweiligen Gerüstseitenelements 30. Die innere Querschnittsform der Hülsen 22 ist derart an die äußere Querschnittsform der Verbindungsvorsprünge 31 angepasst, dass die Gerüstseitenelemente 30 nach dem Einführen der Verbindungsvorsprünge 31 in die Hülsen 22 sicher gehalten werden. Das Einführen erfolgt entlang der in Figur 3 illustrierten gestrichelten Linien. Durch die Querverbindungselemente 20 werden die beiden Gerüstseitenelemente 30 somit in einem Abstand in Querrichtung im Wesentlichen parallel zueinander positioniert.

Das in Figur 3 links befindliche Querverbindungselement 20 weist zwei Hülsen 22 auf, die mit zwei zusätzlichen Gerüstseitenelementen 30 eines in Figur 3 nicht gezeigten benachbarten Gerüstmoduls verbunden werden können. Auf diese Weise können zwei erfindungsgemäße Gerüstmodule miteinander verbunden werden.

An dem in Figur 3 rechten Ende des Gerüstmoduls 14 weist das dort befindliche Querverbindungselement 20 zwei Hülsen 22' auf, die zum Herstellen einer Verbindung mit dem Abschlusselement 36 dienen. Das Abschlusselement 36 ist mit entsprechenden Verbindungsvorsprüngen 31' ausgestattet, die in die Hülsen 22' passen. Um hier eine hohe Kompatibilität der zu schaffen, können die Elemente 22' bzw. 31' identische Abmessungen aufweisen wie die Elemente 22 bzw. 31.

Zur zusätzlichen Stabilisierung weisen die oberen Längsbalken 33 der Gerüstseitenelemente 30 Durchgangslöcher auf, in die jeweils ein Bolzen eines Verbindungselements 35 eingeführt werden kann, um die oberen Längsbalken 33 benachbarter Gerüstmodule 14 miteinander zu verbinden. Weitere Durchgangslöcher sind auch im oberen Balken des Abschlusselements 36 vorgesehen, um auch den oberen Balken des Abschlusselements 36 mit Hilfe eines Eckverbinders 37 mit den oberen Längsbalken 33 zu verbinden.

Von dem Querbalken 21 der Querverbindungselemente ragen jeweils horizontal und in Längsrichtung ausgerichtete obere Halteelemente 23 und untere Halteelemente 24 ab. Die Halteelemente 23, 24 dienen zum Halten einer im Bodenbereich 26 des Gerüstmoduls 14 positionierbaren Europool-Palette 40. In Verbindung mit den nachfolgend beschriebenen Figuren 4 bis 6 wird dies näher erläutert.

Figur 4 zeigt eine Draufsicht auf einen Teilbereich des Gerüstmoduls 14 der Figur 3. Insbesondere sind zwei Querverbindungselemente 20 dargestellt, wobei die Gerüstseitenelemente 30 aus Gründen der Übersichtlichkeit weggelassen wurden. Zusätzlich zu den Querverbindungselementen 20 ist eine Europool-Palette 40 dargestellt, die im Bodenbereich des Gerüstmoduls positioniert ist. Die Palette 40 weist insgesamt fünf Längslatten 42 auf, deren Oberseite die Transportfläche des Gerüstmoduls 14 bildet. Die Längslatten 42 sind mit drei unterhalb der Längslatten 42 positionierten Querlatten 41 verbunden. Das Halteelement 23 befindet sich oberhalb der linken Querlatte 41, so dass sich die Palette 40 relativ zum Halteelement 23 nicht nach oben bewegen kann. Zudem ist das Halteelement 23 in einen Zwischenraum zwischen zwei Längslatten 42 der Palette 40 eingeführt, so dass die Palette 40 relativ zum Halteelement 23 in Querrichtung an einem Verrutschen gehindert wird. Auf der rechten Seite der Palette 40 wurden die Halteelemente 23 des weiteren Querverbindungselements 20 auf analoge Weise in die entsprechenden Zwischenräume zwischen den Längslatten 42 eingeschoben, so dass die Palette 40 auf beiden Seiten fixiert wird. Wenn die Palette 40 in Längsrichtung bewegt wird, stößt sie gegen einen am Querbalken 21 gebildeten Anschlag 25 an (siehe Figur 3).

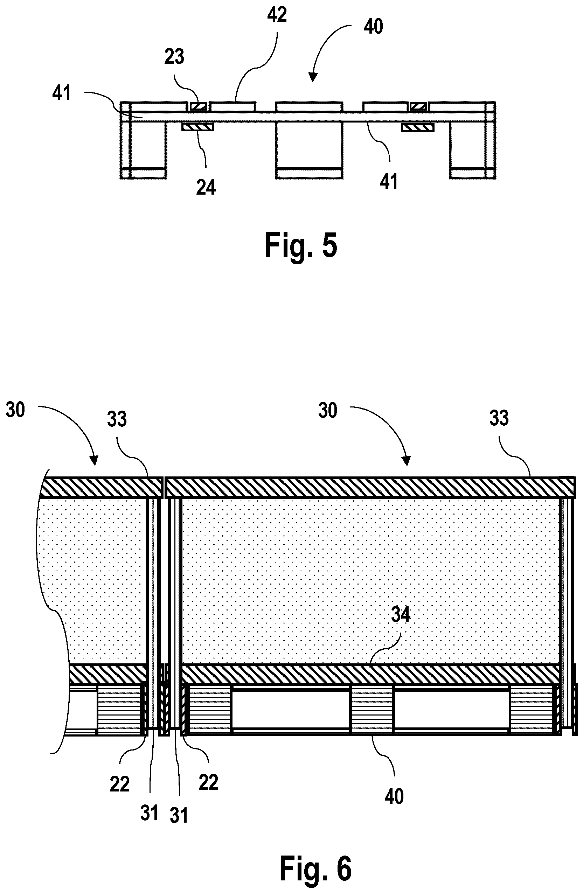

Figur 5 zeigt eine weitere Querschnittsansicht eines Teilbereichs des Gerüstmoduls der Figur 3, wobei die Schnittebene vertikal und senkrecht zu den Gerüstseitenelementen 30 ausgerichtet ist und durch die Halteelemente 23, 24 sowie die in diesem Bereich positionierte Palette 40 verläuft. In dieser Ansicht ist erkennbar, dass die Halteelemente 23 sich im Zwischenraum zwischen zwei Längslatten 42 befinden und zudem nicht über eine Oberseite der Palette hinausragen. Dies hat den Vorteil, dass durch die Halteelemente 23 keine Unebenheiten in der Transportfläche erzeugt werden.

Zudem ist erkennbar, dass die Halteelemente 24 an einer Unterseite der Querlatte 41 der Palette 40 anliegen. Dadurch kann die Palette relativ zum Halteelement 24 nicht nach unten bewegt werden. Es kann vorgesehen sein, dass die Querlatte 41 reibschlüssig zwischen den Halteelementen 23, 24 gehalten wird. Durch den Reibschluss wird einem Verrutschen der Palette in Längsrichtung entgegengewirkt, wobei gleichzeitig eine relative Verschiebung der Palette in Längsrichtung bei einem höheren Kraftaufwand (insbesondere beim initialen Einschieben der Halteelemente in die Zwischenräume) möglich bleibt. Möglich ist alternativ oder zusätzlich auch, dass eines oder beide Halteelemente 23, 24 ein Befestigungselement, insbesondere ein Durchgangsloch zur Herstellung einer Verbindung mit der Querlatte 41 aufweisen.

Figur 6 zeigt eine seitliche Querschnittsdarstellung eines erfindungsgemäßen Gerüstmoduls 14, wobei ein damit verbundenes weiteres Gerüstmodul 14 teilweise dargestellt ist. Die Schnittebene ist vertikal ausgerichtet und verläuft parallel zu einem Gerüstseitenelement 30. Die Schnittebene schneidet zudem die Hülsen 22 sowie die darin eingeführten Verbindungsvorsprünge 31.

Es ist erkennbar, dass die Verbindungsvorsprünge 31 der in Längsrichtung benachbarten Gerüstseitenelemente 30 in die beiden in Längsrichtung benachbarten Hülsen 22 eingeführt sind. Indem die beiden Hülsen 22 an einem gemeinsamen Querbalken 21 fixiert sind (vgl. Figur 3), können zwei benachbarte Gerüstmodule auf einfache Weise miteinander lösbar verbunden werden. Weiterhin ist erkennbar, dass eine Unterseite des unteren Längsbalkens 34 auf der Oberseite der Palette 40 aufliegt. Zudem befindet sich eine Unterseite der Hülsen 22 mit einer Unterseite der Palette 40 in einer Ebene. Auch die Oberseiten der oberen Längsbalken 33 der benachbarten Gerüstmodule liegen in einer Ebene. Es können daher mehrere Gerüstmodulreihen, wie in Figur 1 gezeigt, gestapelt werden, indem die Randbereiche der Unterseite der Palette 40 und die Randbereiche Querverbindungselemente (in denen sich die Hülsen 22 befinden) auf den Längsbalken 33 einer darunter befindlichen Gerüstmodulreihe abgestellt werden. Mehrere übereinander gestapelte Gerüstmodule oder Gerüstmodulreihen können mit Hilfe von Spanngurten miteinander verzurrt werden, um die Stabilität weiter zu erhöhen. Zudem kann das Gerüstsystem, nachdem es auf eine Ladefläche eines Transportfahrzeugs geladen wurde, auf einfache Weise mit Hilfe von Spanngurten an der Ladfläche bzw. an den dort vorhandenen Einrichtungen zur Ladungssicherung fixiert werden.

## Patentansprüche

1. Gerüstmodul (14) für ein Gerüstsystem (13) zum Transportieren eines Transportguts, insbesondere eines Langguts, umfassend zwei Gerüstseitenelemente (30) zur seitlichen Begrenzung einer Transportfläche (15) und wenigstens ein Querverbindungselement (20), das mit den beiden Gerüstseitenelementen (30) zur Herstellung eines Transportzustands des Gerüstmoduls (14) lösbar verbindbar ist, um die Gerüstseitenelemente (30) auf gegenüberliegenden Seiten der Transportfläche (15) zu positionieren, wobei das Gerüstmodul (14) einen Bodenbereich (26) aufweist, in dem im Transportzustand des Gerüstmoduls (14) eine Standard-Palette (40) derart anordenbar ist, dass eine Oberseite der Standard-Palette (40) die Transportfläche (15) bildet, wobei das Querverbindungselement (20) und/oder die Gerüstseitenelemente (40) weiterhin wenigstens ein Halteelement (23, 24) aufweisen, das zum Halten der Standard-Palette (40) am Gerüstmodul (14) ausgebildet ist, wobei das Gerüstmodul (14) ein erstes Gerüstmodul (14) ist, wobei das erste Gerüstmodul (14) mit einem in Längsrichtung des ersten Gerüstmoduls (14) benachbarten identischen zweiten Gerüstmodul (14) derart lösbar verbindbar ist, dass die Transportfläche (15) des ersten Gerüstmoduls (14) mit einer Transportfläche (15) des zweiten Gerüstmoduls (14) eine in Längsrichtung durchgängige gemeinsame Transportfläche bilden, wobei die Gerüstseitenelemente (30) des ersten Gerüstmoduls (14) und die Gerüstseitenelemente (30) des zweiten Gerüstmoduls (14) mit einem gemeinsamen Querverbindungselement (20) lösbar verbindbar sind.

2. Gerüstmodul (14) nach Anspruch 1, das mit einem weiteren im Wesentlichen identisch ausgebildeten Gerüstmodul (14) im Transportzustand stapelbar ausgebildet ist.

3. Gerüstmodul (14) gemäß Anspruch 1 oder 2, bei dem das Querverbindungselement (20) an seinen Querenden jeweils eine Aufnahme (22) aufweist, wobei die Gerüstseitenelemente (30) an ihren Längsenden jeweils einen zum Einführen in eine der Aufnahmen (24) ausgebildeten Verbindungsvorsprung (31) aufweisen.

4. Gerüstmodul (14) gemäß Anspruch 3, bei dem die Aufnahme (22) als Hülse ausgebildet ist, in die der Verbindungsvorsprung einführbar ist.

5. Gerüstmodul (14) gemäß Anspruch 3 oder 4, bei dem die Aufnahme (21) eine Erstreckung in vertikaler Richtung aufweist, die wenigstens 50 mm, vorzugsweise wenigstens 100 mm beträgt.

6. Gerüstmodul (14) gemäß einem der Ansprüche 1 bis 5, bei dem das Halteelement (24) dazu ausgebildet ist, an einer Unterseite eines Bauteils (41) der Standard-Palette (40) anzuliegen, wenn sich das Gerüstmodul (14) im Transportzustand befindet.

7. Gerüstmodul (14) gemäß einem der Ansprüche 1 bis 6, bei dem das Halteelement (23) dazu ausgebildet ist, an einer Oberseite eines Bauteils (41) der Standard-Palette (40) anzuliegen, wenn sich das Gerüstmodul (14) im Transportzustand befindet.

8. Gerüstmodul (14) gemäß einem der Ansprüche 1 bis 7, welches ein erstes Halteelement (24) und ein zweites Halteelement (23) umfasst, wobei das erste Halteelement und das zweite Halteelement dazu ausgebildet sind, einen Reibschluss mit einem Bauteil (41) der Standard-Palette (40) herzustellen, wenn sich das Gerüstmodul (14) im Transportzustand befindet.

9. Gerüstmodul (14) nach einem der Ansprüche 6 bis 8, bei dem das Halteelement (23, 24) ein Befestigungsmittel zur Herstellung einer Verbindung mit dem Bauteil (41) aufweist.

10. Gerüstmodul (14) nach einem der Ansprüche 6 bis 9, bei dem wenigstens eines der Halteelemente (23) zur Bildung eines Formschlusses mit der Standard-Palette (40) eingerichtet ist, so dass im Transportzustand einem seitlichen Verrutschen der Standard-Palette (40) entgegengewirkt wird.

11. Gerüstmodul (14) nach einem der Ansprüche 1 bis 10, das im Transportzustand des Gerüstmoduls (14) im Bodenbereich wenigstens einen Anschlag (25) aufweist, der dazu ausgebildet ist, einem Verrutschen der Standard-Palette (40) in Längsrichtung entgegenzuwirken.

12. Gerüstmodul (14) nach Anspruch 11, bei dem der Anschlag (25) an dem wenigstens einen Querverbindungselement (20) gebildet ist.

13. Gerüstsystem (13) zum Transportieren von Langgut, umfassend ein erstes Gerüstmodul (14) nach Anspruch 1, und ein zweites Gerüstmodul (14) nach Anspruch 1.

14. Gerüstsystem nach Anspruch 13, bei dem ein Gerüstseitenelement (30) des ersten Gerüstmoduls (14) relativ zu einem Gerüstseitenelement (30) des zweiten Gerüstmoduls (14) durch ein Verbindungselement (35) lösbar verbindbar ist.

15. Gerüstsystem nach einem der Ansprüche 13 bis 14, weiterhin umfassend zwei Standard-Paletten (40), die im jeweiligen Bodenbereich der Gerüstmodule (14) derart positioniert sind, dass die Oberseiten der Standard-Paletten eine gemeinsame in Längsrichtung durchgängige Transportfläche bilden.
